# FASCICULE DE BREVET EUROPEEN

(11) **EP 1 245 117 B1**
(45) Date de publication et mention de la délivrance du brevet: **07.12.2005**
(21) Numéro de dépôt: 01903866.0
(22) Date de dépôt: 03.01.2001
(51) Int. Cl.: H04N 7/24, H04N 7/173, H04N 5/00

(54) **PROCEDE INFORMATIQUE POUR L'EXPLOITATION D'UNE EMISSION DE TELEVISION NUMERIQUE INTERACTIVE**
COMPUTERVERFAHREN ZUR AUSWERTUNG EINER DIGITALEN INTERAKTIVEN FERNSEHSENDUNG
COMPUTERISED METHOD FOR OPERATING AN INTERACTIVE DIGITAL TELEVISION BROADCAST

(30) Priorité: 03.01.2000 FR 0000020
(43) Date de publication de la demande: 02.10.2002
(73) Titulaire: Thomson Licensing, 92100 Boulogne Billancourt (FR)
(72) Inventeur: CHOURAQUI, Jérôme, F-75011 Paris (FR)
(74) Mandataire: Kohrs, Martin
(86) Numéro de dépôt international: PCT/FR2001/000021
(87) Numéro de publication internationale: WO 2001/050764

(56) Documents cités:
- EP-A- 0 853 407
- EP-A- 0 862 328
- EP-A- 0 989 743
- US-A- 5 666 293
- US-A- 5 768 539

## Description

La présente invention concerne le domaine de la télévision numérique interactive.

Elle concerne plus particulièrement le domaine de la diffusion d'émission de télévision numérique, par satellite ou par câble par exemple, associée à des applications multimédias, par exemple des bandeaux publicitaires, des jeux informatiques, des questionnaires d'enquête, etc.

On connaît dans l'état de la technique le brevet EP0989743 concernant un procédé de transmission de données d'applications dans un flux de transport numérique caractérisé en ce qu'il fournit une table de données d'applications contenant des informations concernant les applications exécutées dans chaque service à l'intérieur du flux de transport. La table de données d'applications peut être conçue par une valeur fixe de l'identificateur de paquet (PID) et une valeur d'extension de l'identificateur de table (TID) variant en fonction du bouquet des services choisis. L'emploi d'une table de données d'application simple, permettant de fournir des informations à travers tous les services à l'intérieur du bouquet, offre plusieurs avantages, notamment lorsque l'on décide s'il y a lieu de maintenir ou non certaines applications lors de la commutation entre les services.

On connaît également les brevets américains US5768539 et US5666293. Ils concernent la programmation dynamique d'un terminal numérique de loisirs. Le terminal est reprogrammable à la demande pour chacun des services offerts par un ou plusieurs fournisseurs de services. Le terminal comporte un module d'interface réseau couplant le terminal à un type spécifique de réseau de communication en vue de la réception d'un canal numérique large bande et de l'échange de signaux de gestion entre le terminal et le réseau. Le terminal comporte également un processeur de gestion doté d'une mémoire programme. Le processeur de gestion reçoit les entrées utilisateur et gère la mise en oeuvre du terminal ainsi que l'échange des signaux de gestion via le canal d'échange des signaux de gestion. La mémoire programme stocke les données reçues via le canal numérique large bande sous forme de logiciel exécutable par le processeur de gestion. Les informations numériques reçues en format compressé via le canal numérique large bande sont converties par le processeur audio/vidéo en signaux destinés à piloter un dispositif d'affichage audio/vidéo tel qu'un récepteur de télévision standard. Le processeur de gestion exécute le logiciel reçu et stocke en mémoire pour gérer la suite de la mise en oeuvre du terminal, y compris certaines fonctions du processeur audio/vidéo et au moins quelques réactions aux entrées utilisateur.

Plus précisément, le brevet US 5 768 539 décrit un terminal décodeur programmable comprenant un module interface réseau et un terminal de loisir numérique, qui peut être utilisé dans des réseaux de distribution de programmes vidéos numérique et qui permet le chargement dynamique d'un logiciel d'application dans ce terminal.

L'invention concerne selon son acception la plus générale un procédé pour l'exploitation d'une émission de télévision numérique interactive dans le décodeur d'un utilisateur. Le procédé comprend une étape de réception de cette émission de télévision numérique interactive sous la forme d'un signal numérique comportant un flux de données correspondant à des images vidéos compressées et un flux de données correspondant à au moins une application multimédia, ainsi que des signaux de service pour la gestion desdits flux de données. Le procédé est caractérisé en ce qu'il comprend, lors de la sélection d'une chaîne, une étape de détection du signal de service correspondant à une séquence de synchronisation comportant : une séquence affectée à la désignation de cette application multimédia, et une séquence de signaux affectée aux paramètres d'exécution de cette application multimédia. Le procédé comprend également une étape de chargement de ladite application multimédia dans la mémoire vive du décodeur, une étape d'initialisation de ladite application multimédia avec lesdits paramètres d'exécution, et une étape de lancement de l'application multimédia pour démarrer l'interactivité avec l'utilisateur.

Avantageusement, le procédé selon l'invention comporte une étape préalable de détection de l'identifiant de l'application pour l'activation du chargement de l'application correspondant audit identifiant.

Selon une variante, il comporte une étape déchargement de l'application activable par une commande déclenchée par un utilisateur.

De préférence, le procédé selon l'invention comporte une étape déchargement de l'application activable par un signal de service diffusé dans le signal numérique.

Selon un mode de mise en oeuvre particulier, ledit signal de service activant le déchargement d'une application est constitué par un signal de synchronisation dont l'une des séquences est une séquence particulière.

L'invention concerne également un décodeur comprenant un calculateur disposant d'une mémoire adapté à recevoir une émission de télévision numérique interactive sous la forme d'un signal numérique comportant un flux de données correspondant à des images vidéos compressées et un flux de données correspondant à au moins une application multimédia, ainsi que des signaux de service pour la gestion desdits flux de données. Le décodeur est caractérisé en ce qu'il est en outre adapté à, lors de la sélection d'une chaîne, détecter dans le signal de service correspondant une séquence de synchronisation comportant une séquence affectée à la désignation d'une application multimédia, et une séquence de signaux affectée aux paramètres d'exécution de cette application multimédia ; charger ladite application multimédia dans la mémoire vive du décodeur ; initialiser ladite application multimédia avec lesdits paramètres d'exécution ; et lancer l'application multimédia pour démarrer l'interactivité avec l'utilisateur.

L'invention concerne également un programme d'ordinateur adapté à, lors de l'exécution dans un calculateur d'un décodeur disposant d'une mémoire recevoir une émission de télévision numérique interactive sous la forme d'un signal numérique comportant un flux de données correspondant à des images vidéos compressées et un flux de données correspondant à au moins une application multimédia, ainsi que des signaux de service pour la gestion desdits flux de données. Le programme d'ordinateur est caractérisé en ce qu'il est en outre adapté à, lors de la sélection d'une chaîne, détecter dans le signal de service correspondant une séquence de synchronisation comportant : une séquence affectée à la désignation d'une application multimédia, et une séquence de signaux affectée aux paramètres d'exécution de cette application multimédia. Le programme d'ordinateur est en outre adapté à charger ladite application multimédia dans la mémoire vive du décodeur, initialiser ladite application multimédia avec lesdits paramètres d'exécution, et lancer l'application multimédia pour démarrer l'interactivité avec l'utilisateur.

L'invention sera mieux comprise à la lecture de la description qui suit, se référant à un exemple non limitatif de réalisation et aux figures annexées où :
la figure 1 représente une vue schématique du signal de service "top de synchronisation"
la figure 2 représente la vue schématique d'un équipement pour la mise en oeuvre de l'invention.

L'invention concerne un procédé pour charger une application multimédia dans la mémoire vive d'un terminal décodeur à la réception d'un signal dénommé dans le présent brevet "top de synchronisation".

L'application multimédia peut être constitué par exemple par :
un bandeau publicitaire graphique, textuel ou vidéo;
une publicité paramétrée ;
un jeu ou un questionnaire;
une animation vidéo ou graphique.

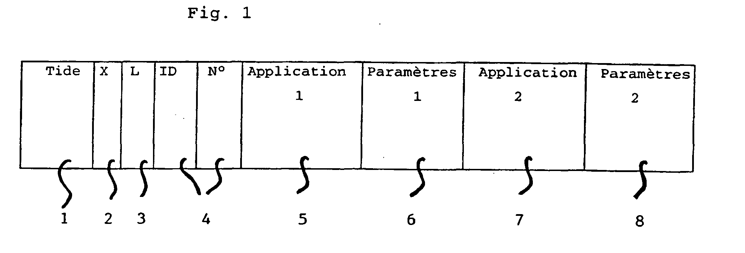

L'application est enregistrée avant la diffusion de l'émission numérique dans un signal de service présentant une structure générale représentée à titre d'exemple en figure 1.

La séquence comprend dans l'exemple décrit trois zones (1 à 3) correspondant à la norme MPEG, comprenant la zone initiale (1) d'identification de la table, les zones (2, 3) de définition de la table et notamment de la longueur de la table, une zone (4) de désignation de la chaîne, une première zone (5) d'identification d'un premier fichier applicatif et une zone complémentaire (6) comprenant les paramètres de l'application, ainsi que des zones additionnelles (7, 8) pour l'identification des applications et paramètres additionnels.

Les fichiers applicatifs eux-mêmes sont transmis sur le flux satellite, conjointement avec le top de synchronisation, mais à part de ce dernier.

Le programme d'exploitation de cette séquence est chargée dans la mémoire du décodeur au moment du démarrage.

Lors de la sélection d'une chaîne et à chaque changement de chaîne par "zapping", le programme d'exploitation identifie la séquence "top de synchronisation" et procède au chargement en mémoire vive de l'application enregistrée dans la séquence. Après le chargement intégral de l'application, le programme selon l'invention procède au lancement, éventuellement après une initialisation avec les paramètres enregistrés dans la séquence "top de synchronisation".

Une fois que l'application est chargée, elle peut remplacer le programme d'exploitation en mémoire vive, afin d'optimiser les ressources mémoires. L'application peut comporter un module pour la détection d'une séquence "top de synchronisation" particulière. La détection de cette séquence provoque le déchargement de l'application et le rechargement du programme d'exploitation.

Lorsque l'application est lancée par le programme d'exploitation elle s'initialise et démarre le programme d'interactivité avec l'utilisateur.

Lorsque l'application s'arrête, le programme d'exploitation est réactivé pour reprendre l'acquisition des "top de synchronisation".

Les applications peuvent prendre des formes très variées. Elles peuvent provoquer l'affichage d'un bandeau publicitaire interactif proposant de sélectionner un canal différent par l'action sur une touche d'une télécommande, ou l'affichage d'une publicité paramétrable, proposant l'envoi d'une information sur l'utilisateur par l'action sur une commande.

La même séquence "top de synchronisation" peut correspondre à plusieurs services différents. La valeur numérique de la zone (4) ID d'identification d'une chaîne permet de réaliser un filtrage pour la sélection des fonctionnalités.

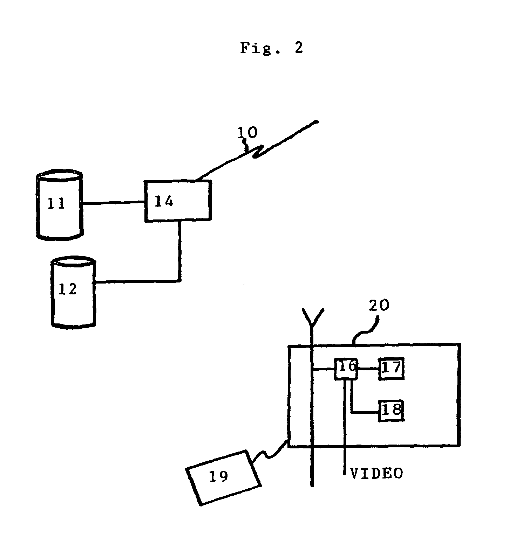

La figure 2 représente une vue schématique d'une architecture pour la mise en oeuvre de l'invention.

L'émission est fourni par un éditeur sous forme de signal numérique (10) par une liaison avec le serveur (11) du diffuseur. Ce serveur reçoit également les fichiers (12) correspondant aux applications. L'éditeur transmet également les données correspondant à la synchronisation des différents éléments, et notamment les informations relatives aux événements déclenchant l'émission d'un signal de service "top de synchronisation". L'ensemble des flux de données sont multiplexés par un multiplexeur (14) puis diffusés.

L'utilisateur dispose d'un décodeur (20) comprenant un calculateur (16) disposant d'une mémoire (17) dans laquelle est enregistrée le programme d'exploitation. Une mémoire vive (18), éventuellement la mémoire principale (17) permet l'enregistrement temporaire de l'application chargée à partir de la séquence "top de synchronisation". Des moyens de télécommande (19) permettent d'interagir avec l'applicatif.

## Revendications

1. Procédé pour l'exploitation d'une émission de télévision numérique interactive dans le décodeur d'un utilisateur, le procédé comprenant :
- une étape de réception de cette émission de télévision numérique interactive sous la forme d'un signal numérique comportant un flux de données correspondant à des images vidéos compressées et un flux de données correspondant à au moins une application multimédia, ainsi que des signaux de service pour la gestion desdits flux de données,
le procédé étant **caractérisé en ce qu'**il comprend :
- lors de la sélection d'une chaîne, une étape de détection du signal de service correspondant à une séquence de synchronisation comportant :
■ une séquence affectée à la désignation de cette application multimédia,
■ une séquence de signaux affectée aux paramètres d'exécution de cette application multimédia,
- une étape de chargement de ladite application multimédia dans la mémoire vive du décodeur,
- une étape d'initialisation de ladite application multimédia avec lesdits paramètres d'exécution,
- une étape de lancement de l'application multimédia pour démarrer l'interactivité avec l'utilisateur.

2. Procédé selon la revendication 1, qui comporte une étape préalable de détection de l'identifiant de l'application pour l'activation du chargement de l'application correspondant audit identifiant.

3. Procédé selon l'une quelconque des revendications 1 ou 2, qui comporte une étape de déchargement de l'application multimédia, activable par une commande déclenchée par un utilisateur.

4. Procédé selon l'une au moins des revendications précédentes, qui comporte une étape de déchargement de l'application multimédia, activable par un signal de service diffusé dans le signal numérique.

5. Procédé selon la revendication 4, dans lequel ledit signal de service activant le déchargement d'une application est constitué par un signal de synchronisation dont l'une des séquences est une séquence particulière.

6. Décodeur comprenant un calculateur (16) disposant d'une mémoire (17) adapté à :
- recevoir une émission de télévision numérique interactive sous la forme d'un signal numérique comportant un flux de données correspondant à des images vidéos compressées et un flux de données correspondant à au moins une application multimédia, ainsi que des signaux de service pour la gestion desdits flux de données,
le décodeur étant **caractérisé en ce qu'**il est en outre adapté à :
- lors de la sélection d'une chaîne, détecter dans le signal de service correspondant une séquence de synchronisation comportant :
■ une séquence affectée à la désignation d'une application multimédia,
■ une séquence de signaux affectée aux paramètres d'exécution de cette application multimédia,
- charger ladite application multimédia dans la mémoire vive du décodeur,
- initialiser ladite application multimédia avec lesdits paramètres d'exécution,
- lancer l'application multimédia pour démarrer l'interactivité avec l'utilisateur.

7. Programme d'ordinateur adapté à, lors de l'exécution dans un calculateur (16) d'un décodeur disposant d'une mémoire (17) :
- recevoir une émission de télévision numérique interactive sous la forme d'un signal numérique comportant un flux de données correspondant à des images vidéos compressées et un flux de données correspondant à au moins une application multimédia, ainsi que des signaux de service pour la gestion desdits flux de données,
le programme d'ordinateur étant **caractérisé en ce qu'**il est en outre adapté à :
- lors de la sélection d'une chaîne, détecter dans le signal de service correspondant une séquence de synchronisation comportant :
■ une séquence affectée à la désignation d'une application multimédia,
■ une séquence de signaux affectée aux paramètres d'exécution de cette application multimédia,
- charger ladite application multimédia dans la mémoire vive du décodeur,
- initialiser ladite application multimédia avec lesdits paramètres d'exécution,
- lancer l'application multimédia pour démarrer l'interactivité avec l'utilisateur.

## Patentansprüche

1. Verfahren für die Auswertung einer interaktiven, digitalen Fernsehsendung in dem Decoder eines Benutzers, mit:
- einem Schritt zum Empfang dieser interaktiven, digitalen Fernsehsendung in der Form eines digitalen Signals, das einen Datenstrom den komprimierten Videobildern entspricht, und einen Datenstrom der einer Multimedia-Anwendung entspricht, sowie Servicesignalen für die Verwaltung der Datenströme enthält,
**gekennzeichnet durch**
- einen Schritt zur Detektion des Servicesignals für eine Synchronisierfolge bei der Wahl eines Programms mit:
• einer Folge für die Bestimmung dieser Multimediaanwendung,
• einer Folge von Signalen für Ausführungsparameter dieser Multimedia-Anwendung,
- einen Schritt zur Ladung der Multimedia-Anwendung in dem RAM des Decoders,
- einen Schritt zur Initialisierung der Multimedia-Anwendung mit den Ausführungsparametern,
- einen Schritt zur Aufführung der Multimedia-Anwendung zum Starten der Interaktivität mit dem Benutzer.

2. Verfahren nach Anspruch 1 mit einem vorangehenden Schritt zur Detektion des Identifizierers der Anwendung für die Aktivierung der Ladung der Identifizierer entsprechenden Anwendung.

3. Verfahren nach einem der Ansprüche 1 oder 2 mit einem Schritt zur Entladung der Multimedia-Anwendung, aktivierbar durch einen Auslösebefehl durch einen Benutzer.

4. Verfahren nach wenigstens einem der vorangehenden Ansprüche mit einem Schritt zur Entladung der Multimedia-Anwendung, aktivierbar durch ein in dem digitalen Signal gesendetes Servicesignal.

5. Verfahren nach Anspruch 4, in dem das Servicesignal, das die Entladung einer Anwendung aktiviert, durch ein Synchronisiersignal gebildet ist, von dem eine der Folgen eine besondere Folge ist.

6. Decoder mit einem einen Speicher (17) enthaltenden Rechner (16) für:
- Empfang einer interaktiven, digitalen Fernsehsendung in der Form eines digitalen Signals, das einen Datenstrom den komprimierten Videobildern entspricht, und einen Datenstrom der einer Multimedia-Anwendung entspricht, sowie Servicesignalen für die Verwaltung der Datenströme enthält, **gekennzeichnet durch**
- Detektion in dem Servicesignal für eine Synchronisierfolge bei der Wahl eines Programms mit:
■ eine Folge für die Bestimmung einer Multimedia-Anwendung,
■ einer Signalfolge für die Ausführungsparameter dieser Multimedia-Anwendung,
- Laden der Multimedia-Anwendung in dem RAM des Decoders,
- Auslösung der Multimedia-Anwendung mit den Ausführungsparametern,
- Auslösung der Multimedia-Anwendung für den Start der Interaktivität mit dem Benutzer.

7. Rechnerprogramm für einen einen Speicher (17) enthaltenden Decoder bei der Durchführung in einem Rechner (16):
- Empfang einer interaktiven, digitalen Fernsehsendung in der Form eines digitalen Signals, das einen Datenstrom den komprimierten Videobildern entspricht, und einen Datenstrom der einer Multimedia-Anwendung entspricht, sowie Servicesignalen für die Verwaltung der Datenströme enthält, **dadurch gekennzeichnet, dass** das Rechnerprogramm außerdem vorgesehen ist für:
- bei der Wahl eines Programms Detektierung einer Synchronisierfolge in dem entsprechenden Servicesignal mit:
• einer Folge für die Bestimmung einer Multimediaanwendung,
• einer Folge von Signalen für Ausführungsparameter dieser Multimediaanwendung,
- Laden der Multimediaanwendung in dem RAM des Decoders,
- Auslösung der Multimediaanwendung mit den Ausführungsparametern,
- Auslösung der Multimediaanwendung zum Start der Interaktivität mit dem Benutzer.

## Claims

1. Method for using an interactive digital television transmission in the decoder of a user, the method comprising:
- a step of receiving the interactive digital television transmission in the form of a digital signal comprising a data stream corresponding to compressed video images and a data stream corresponding to at least one multimedia application, as well as service signals for the management of said data streams,
the method being **characterized in that** it comprises:
- at the selection of a channel, a step of detecting the service signal corresponding to a synchronization sequence comprising:
• a sequence assigned to the designation of the multimedia application,
• a sequence of signals that is assigned to the parameters for executing the multimedia application,
- a step of loading the multimedia application into the random access memory of the decoder,
- a step of initializing the multimedia application with the execution parameters,
- a step of launching the multimedia application so as to start up the interactivity with the user.

2. Method according to Claim 1, which comprises a prior step of detecting the identifier of the application for the activation of the loading of the application corresponding to the identifier.

3. Method according to any one of Claims 1 or 2, which comprises a step of unloading the multimedia application, activatable by a control triggered by a user.

4. Method according to one at least of the preceding claims, which comprises a step of unloading the multimedia application, activatable by a service signal transmitted in the digital signal.

5. Method according to Claim 4, in which the service signal activating the unloading of an application consists of a synchronization signal one of whose sequences is a particular sequence.

6. Decoder comprising a processor (16) having at its disposal a memory (17) and suitable for:
- receiving an interactive digital television transmission in the form of a digital signal comprising a data stream corresponding to compressed video images and a data stream corresponding to at least one multimedia application, as well as service signals for the management of said data streams,
the decoder being **characterized in that** it is furthermore suitable for:
- at the selection of a channel, detecting in the corresponding service signal a synchronization sequence comprising:
• a sequence assigned to the designation of a multimedia application,
• a sequence of signals that is assigned to the parameters for executing the multimedia application,
- loading the multimedia application into the random access memory of the decoder,
- initializing the multimedia application with the execution parameters,
- launching the multimedia application so as to start up the interactivity with the user.

7. Computer program suitable for, during execution in a processor (16) of a decoder having a memory (17):
- receiving an interactive digital television transmission in the form of a digital signal comprising a data stream corresponding to compressed video images and a data stream corresponding to at least one multimedia application, as well as service signals for the management of the data streams,
the computer program being **characterized in that** it is furthermore suitable for:
- at the selection of a channel, detecting in the corresponding service signal a synchronization sequence comprising:
• a sequence assigned to the designation of a multimedia application,
• a sequence of signals that is assigned to the parameters for executing the multimedia application,
- loading the multimedia application into the random access memory of the decoder,
- initializing the multimedia application with the execution parameters,
- launching the multimedia application so as to start up the interactivity with the user.
